# EUROPEAN PATENT SPECIFICATION

(11) **EP 1 377 178 B1**
(45) Date of publication and mention of the grant of the patent: **29.07.2009**
(21) Application number: 02724276.7
(22) Date of filing: 09.04.2002
(51) Int. Cl.: A23K 1/00, A23K 1/18, A23L 1/317

(54) **METHOD OF PREPARING A CHUNKY ANIMAL FOODSTUFF OR FOOD**
VERFAHREN ZUR HERSTELLUNG EINES STÜCKIGEN FUTTER- ODER LEBENSMITTELS
PROCEDE POUR PREPARER DE LA NOURRITURE POUR ANIMAL EN MORCEAUX

(30) Priority: 12.04.2001 DE 10118334
(43) Date of publication of application: 07.01.2004
(73) Proprietor: Mars, Inc., McLean, VA 22101-3883 (US)
(72) Inventor: SCHLEBUSCH, Johannes, P., 28209 Bremen (DE)
(74) Representative: Winkler, Andreas Fritz Ernst
(86) International application number: PCT/EP2002/003939
(87) International publication number: WO 2002/082920

(56) References cited:
- WO-A-97/02760
- DE-A- 19 844 393
- DE-C- 19 800 390
- GB-A- 1 058 459
- US-A- 3 873 736
- US-A- 5 456 933

## Description

The invention relates to a method of preparing a chunky animal foodstuff, and a product producible by said method.

In the production of animal foodstuffs, use is frequently made of emulsions, which may be of vegetable and/or animal origin. In particular in the field of producing animal foodstuffs for pets, greater use is being made of these. At the same time, there is a need to use as large a proportion as possible of meat as raw material, optionally in combination with vegetable proteins, since these are important sources of proteins, minerals, trace elements, fats and vitamins.

In order to solidify the emulsions of a particular composition in conventional processes, they are heated. At temperatures of more than 100° C, both the animal and the vegetable proteins in the emulsion coagulate and denature very rapidly. The hot emulsion is subsequently pumped into a process tube, where it remains at super-atmospheric pressure until the proteins have coagulated completely. The description of one such process is known from the patent EP 0 265 740 A2. In that process, the meaty raw materials in particular lose a great amount of their texture, which the processors subsequently try to compensate for in the known process by means of a process step involving considerable energy and effort.

Apart from solidifying the emulsion in a process tube with heat applied; there are processes which use gas stoves, steam towers or steam tunnels in order to prepare the chunky animal foodstuff and food.

Since either conveyor belts or process tubes are used to solidify the animal foodstuff in the above-mentioned processes, the surface texture of the animal foodstuff is not very variable. The product is only given its final shape in the subsequent cutting process, where the variability of the product shape is heavily restricted for economic reasons.

In another process, water is used as a carrier material, which does not have any shaping effect, because of its low viscosity. For this reason, neither the texture nor the shape of the product produced can be variably controlled.

The texture and shape of a chunky animal foodstuff or produced from a solidifying emulsion plays a major role in the product's acceptance by and animals. Another factor is that, by changing the surface texture and redesigning the shape, it is possible to enlarge the surface of the product considerably and thus to improve the capacity of the final product to absorb additives added to the animal foodstuffs (such as sauces).

DE 19800390 C1 discloses a method of preparing a chunky animal foodstuff providing an alternating layer structure having alternating layers of a first material which solidifies under respective first process conditions and a second material liquefying under second process condition. Thus, only a layered structure can be achieved with the process of DE 19800390 C1.

US 3,873,736 discloses a process for the production of a proteinnaceous food product having a chewy elastic texture comprising the steps of: preparing a mix consisting essentially of a comminuted pasteurized meat component, moisture sufficient to provide 15 to 45% by weight moisture in the total product, and a bacteriostatic water soluble component in quantity sufficient to impart a water activity in the range of about 0.65 to 0.85; incorporating a heat-coagulable protein in said mix and heating the resulting mixture to coagulate the heat-coagulable protein to produce a coherent elastic matric embedding said components.

The problem on which the invention is based is therefore to overcome the disadvantages of the state of the art and to produce an animal foodstuff with greater variability in terms of its shape.

This problem is solved in accordance with the invention in that the emulsion is introduced into a viscous carrier matrix, the emulsion is subjected to conditions which lead it to solidify, the carrier matrix is subjected to conditions which lead it to liquefy, and the solidified emulsion is separated from the liquefied carrier matrix.

In a preferred embodiment, the carrier matrix is a viscous fatty mass.

The emulsion is preferably a meat, vegetable protein or alginate emulsion.

The method of the invention provides for the emulsion to solidify while energy is applied.

According to an alternative method, the emulsion solidifies in the course of time.

In a preferred embodiment, the energy applied consists of microwave energy.

In an alternative embodiment, the energy applied is thermal energy.

It is envisaged that the method be carried out in a tube system.

The invention further envisages that, after the animal foodstuff has been separated, the carrier matrix can be cooled and re-used in the process.

The invention further relates to a chunky animal foodstuff according to claim 10.

The product which can be prepared according to the method of the invention possesses a novel surface texture and shape because of the novel method by which the pieces of animal foodstuff solidify in free flow in a matrix which is initially viscous, then liquefied.

In order to demonstrate the invention more clearly, a particularly preferred embodiment of the invention will now be described in more detail, by means of which an improved product can be prepared in an optimum manner. This method will be explained in more detail by reference to the attached drawing, which shows a schematic view of the device.

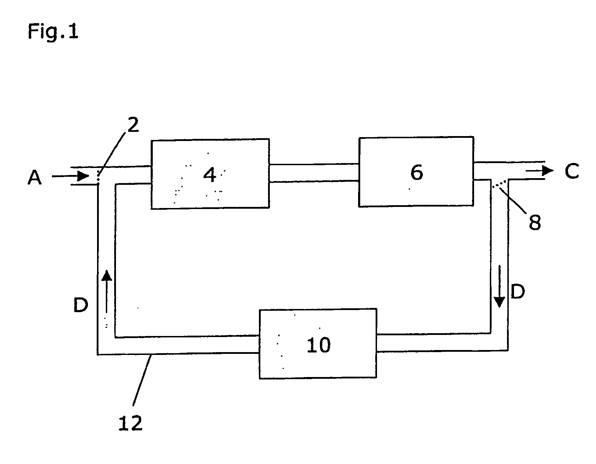

Fig. 1 shows a schematic view of the device according to the invention. An animal foodstuff emulsion A is pumped through a forming nozzle 2 into a tube system 12 in which a matrix D is circulating. The tube system 12 passes through a microwave unit 4 in which, when microwaves are applied, the emulsion solidifies and the matrix liquefies. In the cutting device 6 downstream, the animal foodstuff is cut such that the chunky foodstuff C results, which is separated from the matrix. The liquid matrix D flaws through a sieve 8 into a cooling system 10. The matrix D, which is viscous after cooling, is re-used in the circuit.

In a preferred embodiment of the invention, the microwave unit 4 can take the form of a heating unit which liquefies the matrix by heating after an alginate emulsion, for example, has solidified in the course of time.

The way in which the device according to the invention works will now be described.

A conventional animal foodstuff emulsion A is injected via a forming nozzle 2 into a viscous carrier matrix D, preferably consisting of fat. The fat can, for example, be suet, oil or any other fat. The emulsion A remains in the shape given by the injection nozzle 2 and flow dynamics, since it is supported by the viscous matrix D. In the tube system 12, the emulsion A is passed, in the matrix D, through the microwave unit 4. The microwaves heat the water contained in the protein of emulsion A, which causes emulsion A to coagulate and solidify. Because of the heat generated in emulsion A, matrix D is likewise heated up in the course of the process, which causes it to liquefy. At this moment, the carrier properties of the matrix D are no longer needed, since the emulsion A has already solidified in the desired shape with the chosen surface texture. After the chunky animal foodstuff C has been cut in a cutting device 6, the matrix D is separated from it for re-use, via a sieve 8. In the circuit, the matrix D is cooled down so powerfully in a cooling system 10 that it can be used again as a carrier substance to help emulsion A retain its shape.

In the method of the invention, the fat is primarily used as a carrier substance and is subsequently separated from the chunky animal foodstuff. The surface of the chunky animal foodstuff is defined by the forming injection nozzle and the flow dynamics. As a result, it is possible to produce shapes, such as hollow shapes, and to provide new surfaces, such as flat, striped or corrugated.

The method of the invention and a product producible by said method will now be explained in more detail with reference to two examples:

### Example I:

In order to prepare a meat emulsion, 33 % turkey breast meat, 60 % pigs' liver, 5 % powdered blood plasma and 2 % minerals and vitamins are stirred in a cutter until they are smooth and well emulsified. This viscous meat emulsion is introduced via two concentric tubular nozzles into a stream of hardened palm oil conditioned to 35 to 40° C. The internal diameter of the inner tubular nozzle, the walls of which are 1 mm thick, is 4 mm; that of the outer tubular nozzle is 10 mm. The palm oil matrix, which has been cooled down to 35 to 40° C in a heat exchanger, is pumped through the inner tube, and the meat emulsion through the outer tube. The meat emulsion thus formed is pumped into a tube with an internal diameter of 20 mm into a circulating stream of a fat matrix consisting of hardened palm oil. In said tube, the three flows consisting of the fat matrix on the inside, meat emulsion, and fat matrix on the outside, are passed at a suitably adjusted speed through a microwave heating unit. In this process step, the proteins in the meat emulsion solidify, so that the hollow body of meat thus obtained can be cut into lengths of 35 mm after exiting the flow tube. The fat which has been melted out of the meat via the residual heat is separated by means of a sieve and re-circulated having been conditioned back to 35 to 40° C by a cooler.

### Example 2:

A meat emulsion prepared in accordance with Example 1 is pumped via a tubular nozzle with an internal diameter of 8 mm into a flow tube with an internal diameter of 20 mm. In the flow tube, there is a matrix of hardened palm oil, which has been conditioned to 35 to 40° C. The flow speed of the meat emulsion and the fat matrix are adjusted appropriately. The flow tube is directed through a microwave heating unit, with the proteins in the meat emulsion solidifying while passing through, and after exiting the flow tube, drop-shaped pieces of meat approx. 25 mm in length are obtained. The fat melted via the residual heat from the meat is separated via a sieve and conditioned back to 35 to 40° C using a cooler, and then re-circulated.

The features of the invention disclosed in the above description, in the claims and the drawing may be essential either individually or in any combination in order to carry out the invention in its various embodiments.

## Claims

1. A method of preparing a chunky animal foodstuff from an emulsion, **characterised in that** said emulsion is introduced into a viscous carrier matrix, said emulsion is subjected to conditions which lead it to solidify, said carrier matrix is subjected to conditions which lead it to liquefy, and the solidified emulsion is separated from the liquefied carrier matrix.

2. A method as claimed in Claim 1, **characterised in that** the carrier matrix is a viscous fatty mass.

3. A method as claimed in Claim 1 or 2, **characterised in that** the emulsion is a meat, vegetable protein or alginate emulsion.

4. A method as claimed in any of Claims 1 to 3, **characterised in that** the emulsion solidifies while energy is applied.

5. A method as claimed in any of Claims 1 to 3, **characterised in that** the emulsion solidifies in the course of time.

6. A method as claimed in Claim 4, **characterised in that** the energy applied is microwave energy.

7. A method as claimed in Claim 4, **characterised in that** the energy applied is thermal energy.

8. A method as claimed in any of the preceding claims, **characterised in that** the method is carried out in a tube system.

9. A method as claimed in any of the preceding claims, **characterised in that**, after the animal foodstuff has been separated, the carrier matrix is cooled and re-used in the process.

10. A chunky animal foodstuff producible by a method according to any of the preceding claims, wherein the surface of the chunky animal foodstuff is defined by a forming injection nozzle and flow dynamics.

## Patentansprüche

1. Verfahren zur Herstellung eines stückigen Futtermittels aus einer Emulsion, **dadurch gekennzeichnet, dass** die Emulsion in eine viskose Trägermatrix eingebracht wird, die Emulsion Bedingungen unterzogen wird, die zu einer Verfestigung derselben führen, die Trägermatrix Bedingungen unterzogen wird, die zu einer Verflüssigung derselben führen, und die verfestigte Emulsion von der verflüssigten Trägermatrix abgetrennt wird.

2. Verfahren nach Anspruch 1, **dadurch gekennzeichnet, dass** die Trägermatrix eine viskose Fettmasse ist.

3. Verfahren nach Anspruch 1 oder 2, **dadurch gekennzeichnet, dass** die Emulsion eine Fleisch-, Pflanzenprotein- oder Alginatemulsion ist.

4. Verfahren nach einem der Ansprüche 1 bis 3, **dadurch gekennzeichnet, dass** die Emulsion sich unter Energiezufuhr verfestigt.

5. Verfahren nach einem der Ansprüche 1 bis 3, **dadurch gekennzeichnet, dass** sich die Emulsion durch Zeitablauf verfestigt.

6. Verfahren nach Anspruch 4, **dadurch gekennzeichnet, dass** die zugeführte Energie Mikrowellenenergie ist.

7. Verfahren nach Anspruch 4, **dadurch gekennzeichnet, dass** die zugeführte Energie thermische Energie ist.

8. Verfahren nach einem der vorangehenden Ansprüche, **dadurch gekennzeichnet, dass** das Verfahren in einem Röhrensystem durchgeführt wird.

9. Verfahren nach einem der vorangehenden Ansprüche, **dadurch gekennzeichnet, dass** die Trägermatrix nach dem Abtrennen des Futtermittels abgekühlt und erneut im Prozess eingesetzt wird.

10. Stückiges Futtermittel, herstellbar nach einem Verfahren nach einem der vorangehenden Ansprüche, wobei die Oberfläche des stückigen Futtermittels über eine formgebende Spritzdüse und Fließdynamik definiert ist.

## Revendications

1. Un procédé de préparation d'un produit aliment, sous forme de morceaux, pour animaux à partir d'une émulsion, **caractérisé en ce que** ladite émulsion est introduite dans une matrice-support visqueuse, **en ce que** ladite émulsion est soumise à des conditions qui produisent sa solidification, **en ce que** ladite matrice-support est soumise à des conditions qui conduisent à sa liquéfaction et **en ce que** l'émulsion solidifiée est séparée de la matrice-support liquéfiée.

2. Un procédé tel que revendiqué dans la revendication 1, **caractérisé en ce que** la matrice-support est une masse grasse visqueuse.

3. Un procédé tel que revendiqué dans la revendication 1 ou 2, **caractérisé en ce que** l'émulsion est une émulsion d'un alginate, d'une protéine végétale ou d'une viande.

4. Un procédé tel que revendiqué dans une quelconque des revendications 1 à 3, **caractérisé en ce que** l'émulsion se solidifie lorsque de l'énergie lui est appliquée.

5. Un procédé tel que revendiqué dans une quelconque des revendications 1 à 3, **caractérisé en ce que** l'émulsion se solidifie avec le temps.

6. Un procédé tel que revendiqué dans la revendication 4, **caractérisé en ce que** l'énergie appliquée est générée par microondes.

7. Un procédé tel que revendiqué dans la revendication 4, **caractérisé en ce que** l'énergie appliquée est de l'énergie thermique.

8. Un procédé tel que revendiqué dans une quelconque des revendications précédentes, **caractérisé en ce qu'**il est mis en oeuvre dans un système tubulaire.

9. Un procédé tel que revendiqué dans une quelconque des revendications précédentes, **caractérisé en ce que** après séparation du produit aliment pour animaux, la matrice-support est refroidie et est réutilisée dans le procédé.

10. Un produit aliment sous forme de morceaux pour animaux susceptible d'être produit par un procédé selon une quelconque des revendications précédentes, dans lequel la surface dudit produit aliment sous forme de morceaux pour animaux est mise en forme par action d'une buse d'injection et de la dynamique des fluides.
